(19) Europäisches Patentamt
European Patent Office
Office européen des brevets

(11) **EP 2 617 111 B1**

(12) **EUROPÄISCHE PATENTSCHRIFT**

(45) Veröffentlichungstag und Bekanntmachung des Hinweises auf die Patenterteilung:
**16.10.2019  Patentblatt 2019/42**

(21) Anmeldenummer: **11745505.5**

(22) Anmeldetag: **14.07.2011**

(51) Int Cl.:
*H02B 3/00* (2006.01)    *H02B 13/065* (2006.01)

(86) Internationale Anmeldenummer:
**PCT/EP2011/062020**

(87) Internationale Veröffentlichungsnummer:
**WO 2012/034732 (22.03.2012 Gazette 2012/12)**

(54) **VERFAHREN ZUM BETREIBEN EINES SCHALTFELDS EINER ELEKTRISCHEN SCHALTANLAGE**

METHOD FOR OPERATING A SWITCH PANEL OF ELECTRICAL SWITCHGEAR

PROCÉDÉ DE FONCTIONNEMENT D'UN PANNEAU DE COMMANDE D'UNE INSTALLATION DE COMMUTATION ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.09.2010  DE 102010046141**

(43) Veröffentlichungstag der Anmeldung:
**24.07.2013  Patentblatt 2013/30**

(73) Patentinhaber: **Schneider Electric Sachsenwerk GmbH**
**93055 Regensburg (DE)**

(72) Erfinder: **KALTENBORN, Uwe**
**93049 Regensburg (DE)**

(74) Vertreter: **DREISS Patentanwälte PartG mbB**
**Friedrichstraße 6**
**70174 Stuttgart (DE)**

(56) Entgegenhaltungen:
**WO-A1-03/056672     WO-A2-2008/042052**
**JP-A- 2009 254 104**

**Beschreibung**

Die Erfindung betrifft ein Verfahren zum Betreiben eines Schaltfelds einer elektrischen Schaltanlage.

In einem derartigen Schaltfeld sind elektrische Komponenten der elektrischen Schaltanlage untergebracht beispielsweise Leistungsschalter oder dergleichen. Weiterhin sind einem derartigen Schaltfeld ein oder mehrere Sensoren zugeordnet, die zur Messung von Betriebsgrößen des Schaltfelds verwendet werden.

Es ist bekannt, für ein derartiges Schaltfeld ein Simulationsmodell für das thermische Verhalten desselben zu erstellen. Es ist dabei möglich, dass das Simulationsmodell nur das statische thermische Verhalten des Schaltfelds betrifft, oder dass auch das dynamische thermische Verhalten des Schaltfelds in dem Simulationsmodell berücksichtigt ist.

Weiterhin ist bekannt, dass ein derartiges Simulationsmodell gegebenenfalls dazu verwendet werden kann, den Betrieb des Schaltfelds zu überwachen. Hierzu ist es aber erforderlich, dass die Berechnung des Simulationsmodells möglichst schnell erfolgt, so dass die Ergebnisse der Berechnungen des Simulationsmodells in Echtzeit zur Bewertung und Beeinflussung des Schaltfelds herangezogen werden können. Dieses Erfordernis ist für dynamische Simulationsmodelle zumeist nicht erfüllbar, so dass das dynamische thermische Verhalten des Schaltfelds im Betrieb desselben zumeist nicht berücksichtigt werden kann.

JP 2009 254104 A offenbart eine Messvorrichtung zur Messung einer Oberflächentemperatur einer Sammelschiene, eine Messvorrichtung zur Messung einer Umgebungslufttemperatur sowie eine Messvorrichtung zur Messung eines Stromes, der durch die Sammelschiene fließt. Eine Berechnungseinheit ermittelt Parameter, die ein Hitzemodell der Sammelschiene spezifizieren. Sind diese Parameter ermittelt, kann ein Hitzewiderstand, eine Hitzekapazität und ein kalorischer Wert ermittelt werden. Anschließend können die berechneten Parameter mit gelernten Referenzparametern verglichen werden. Die Berechnungseinheit gibt einen Alarm aus. Kurz nachdem ein Nutzer den Alarm bemerkt, kann ein Betrieb gestoppt werden.

Aufgabe der Erfindung ist es, ein Verfahren zum Betreiben eines Schaltfelds einer elektrischen Schaltanlage zu schaffen, bei dem das dynamische thermische Verhalten des Schaltfelds im Betrieb berücksichtigt werden kann.

Die Erfindung löst diese Aufgabe durch ein Verfahren nach dem Anspruch 1 sowie durch eine elektrische Schaltanlage nach dem Anspruch 12.

Erfindungsgemäß wird ein Simulationsmodell des thermischen Verhaltens des Schaltfelds ermittelt, und es wird in Abhängigkeit von dem Simulationsmodell eine Transferfunktion ermittelt, die mindestens zwei Betriebsgrößen des Schaltfelds miteinander in Beziehung setzt.

Die Transferfunktion kann während des Betriebs des Schaltfelds in Echtzeit ausgeführt werden. Dies bedeutet, dass eine gegebenenfalls erforderliche Beeinflussung des Schaltfelds aufgrund des ermittelten Ergebnisses der Transferfunktion noch so rechtzeitig vorgenommen werden kann, dass ein Schaden an dem Schaltfeld in jedem Fall vermieden wird. Damit eröffnet die Erfindung eine vorausschauende Überwachung des Schaltfelds unter Berücksichtigung des dynamischen thermischen Verhaltens desselben.

Bei einer Ausgestaltung der Erfindung wird für eine der Betriebsgrößen ein Wert vorgegeben, und es wird für die andere/n Betriebsgröße/n über die Transferfunktion ein Wert ermittelt, der in die Zukunft gerichtet ist. Es wird dann die Transferfunktion mit einem im Betrieb des Schaltfelds auftretenden Wert der vorgegebenen Betriebsgröße berechnet und in Abhängigkeit von dem mittels der Transferfunktion ermittelten Wert der anderen Betriebsgröße/n das Schaltfeld beeinflusst. Der in die Zukunft gerichtete Wert wird also dahingehend überwacht, dass beispielsweise ein Überschreiten dieses Werts zu einer Beeinflussung des Schaltfelds, beispielsweise zu einem Abschalten des Schaltfelds führt.

Weitere Merkmale, Anwendungsmöglichkeiten und Vorteile der Erfindung ergeben sich aus der nachfolgenden Beschreibung von Ausführungsbeispielen der Erfindung, die in zwei Figuren dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in den Figuren.

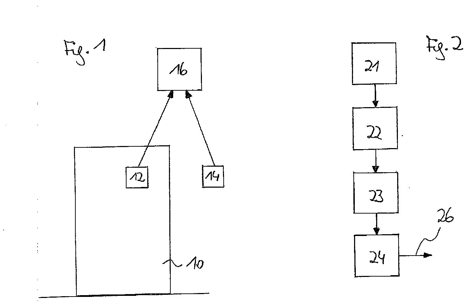

Die Figur 1 zeigt ein schematisches Blockschaltbild eines Ausführungsbeispiels einer erfindungsgemäßen elektrischen Schaltanlage und Figur 2 zeigt einen schematischen Ablaufplan eines Verfahrens zum Betreiben der Schaltanlage der Figur 1.

Eine elektrische Schaltanlage besteht aus einer Mehrzahl von Schaltfeldern. Die Schaltfelder sind über Sammelschienen elektrisch miteinander verbunden. In den einzelnen Schaltfeldern sind unterschiedliche elektrische Komponenten untergebracht, beispielsweise Leistungsschalter, Trenner/Erder-Schalter und dergleichen. Über diese elektrischen Komponenten werden unter anderem Abzweigungen von den Sammelschienen zu elektrischen Verbrauchern realisiert.

In der Figur 1 ist ein einzelnes Schaltfeld 10 einer Schaltanlage dargestellt. Das Schaltfeld 10 weist ein schrankförmiges metallisches Gehäuse auf, das auf einem horizontalen Boden aufgestellt ist. Das Schaltfeld 10 ist in mehrere Gehäuseteile aufgeteilt, wobei einzelne Gehäuseteile als gasdichte Behälter ausgebildet sein können. Die elektrischen Komponenten des Schaltfelds 10 sind in den einzelnen Gehäuseteilen und Behältern untergebracht.

Ein erster Temperatursensor 12 ist einer elektrischen Komponente des Schaltfelds 10 zugeordnet. Der erste Temperatursensor 12 misst eine Bauteiltemperatur TB, also diejenige Temperatur, die die zugeordnete elektrische Komponente des Schaltfelds 10 aufgrund ihres Betriebs aufweist.

Der erste Temperatursensor 12 kann an einer geerdeten Komponente des Schaltfelds 10 angeordnet sein, beispielsweise an einem Trenner/Erder-Schalter. In diesem Fall kann der erste Temperatursensor 12 beispielsweis als Thermoelement ausgebildet sein. Der erste Temperatursensor 12 kann aber auch an einer stromführenden Komponente angebracht sein, beispielsweise an einem elektrischen Leiter. In diesem Fall kann der erste Temperatursensor 12 beispielsweise als optisches Sensorelement ausgebildet sein. Weist das Schaltfeld 10 einen gasdichten Behälter auf, in dem beispielsweise ein Leistungsschalter untergebracht ist, so kann der erste Temperatursensor 12 beispielsweise an der Oberfläche des Gasbehälters angebracht sein.

Es versteht sich, dass der erste Temperatursensor 12 auch an anderen geeigneten Komponenten des Schaltfelds 10 angeordnet sein kann. Ebenfalls versteht es sich, dass mehrere derartige erste Temperatursensoren 12 vorhanden sein können, mit denen mehrere Bauteiltemperaturen TB messbar sind.

Weiterhin ist ein zweiter Temperatursensor 14 vorhanden, der unabhängig von den elektrischen Komponenten des Schaltfelds 10 angeordnet ist. Der zweite Temperatursensor 14 misst eine Umgebungstemperatur TU, also diejenige Temperatur, die in der Umgebung der elektrischen Komponenten des Schaltfelds 10 vorhanden ist.

Der zweite Temperatursensor 14 kann irgendwo in dem Raum oder in dem Gebäude angeordnet sein, in dem das Schaltfeld 10 aufgestellt ist. Der zweite Temperatursensor 14 kann jedoch auch - abweichend von der Figur - innerhalb des Schaltfelds 10 angeordnet sein, und zwar in diesem Fall unabhängig von einer elektrischen Komponente, also beispielsweise an einer Außenwand des Gehäuses des Schaltfelds 10. Es versteht sich, dass auch mehrere zweite Temperatursensoren 14 vorhanden sein können.

In nicht-dargestellter Weise sind dem Schaltfeld 10 weitere Sensoren zur Messung von einer oder mehreren Betriebsgrößen desselben zugeordnet. Bei den zu messenden Betriebsgrößen kann es sich beispielsweise um Ströme und/oder Spannungen oder dergleichen handeln. Alternativ ist es auch möglich, dass eine der genannten Betriebsgrößen nicht tatsächlich gemessen wird, sondern auf sonstige Weise, beispielsweise mit Hilfe von Modellierungen, aus anderen Betriebsgrößen ermittelt wird.

Die Bauteiltemperatur TB und die Umgebungstemperatur TU sind einem Steuergerät 16 zugeführt. Ebenso sind die gemessenen oder anderweitig ermittelten Betriebsgrößen dem Steuergerät 16 zugeführt. Bei dem Steuergerät 16 kann es sich beispielsweise um ein elektronisches Rechengerät handeln, das entsprechend den nachfolgenden Erläuterungen programmiert ist. Das Steuergerät 16 kann innerhalb des Schaltfelds 10 oder-wie in der Figur dargestellt - völlig unabhängig und außerhalb von dem Schaltfeld 10 angeordnet sein.

In der Figur 2 ist ein Verfahren zum Betreiben der elektrischen Schaltanlage dargestellt, insbesondere ein Verfahren zum Betreiben des Schaltfelds 10 der Figur 1.

In einem ersten Schritt 21 wird eine Simulation des zeitlichen thermischen Verhaltens des Schaltfelds 10 durchgeführt. Hierzu können beispielsweise die folgenden Verfahren einzeln oder in Kombination verwendet werden:

ein Wärmenetzwerk-Modell (z.B. TNM = thermal network method) und/oder ein zwei- oder dreidimensionales Strömungsmechanik-Modell (z.B. CFD = computational fluid dynamics) und/oder ein Modell nach der Methode der finiten Elemente (FEM = finite elements method) und/oder ein Modell nach der Randelement-Methode (BEM = boundary element method). Die Simulation kann in Unterschritte aufgeteilt sein,
beispielsweise derart, dass zuerst eine statische Betrachtung des thermischen Verhaltens des Schaltfelds 10 vorgenommen wird und erst danach das zeitliche bzw. dynamische thermische Verhalten berücksichtigt wird. Die Simulation wird von einem Rechengerät,
beispielsweise einem Personalcomputer durchgeführt. Gegebenenfalls kann die Simulation auch mit Hilfe des Steuergeräts 16 durchgeführt werden. Als Ergebnis des ersten Schritts 21 liegt dann ein Simulationsmodell des thermischen Verhaltens des Schaltfelds 10 in Abhängigkeit von der Zeit auf dem Rechengerät vor.

In einem zweiten Schritt 22 wird eine Validierung des auf dem Rechengerät vorliegenden Simulationsmodells durchgeführt. Hierzu werden Messungen von Betriebsgrößen des Schaltfelds 10 während dessen Betrieb durchgeführt. Bei den Betriebsgrößen des Schaltfelds 10 kann es sich um Ströme, Spannungen, Temperaturen, Zeitdauern oder dergleichen handeln. Die ermittelten tatsächlichen Messwerte der Betriebsgrößen werden mit entsprechend zugehörigen, von dem Simulationsmodell ermittelten Werten verglichen. Anhand der Abweichungen der von dem Simulationsmodell ermittelten Werte von den tatsächlichen Messwerten derselben Betriebsgrößen kann das Simulationsmodell korrigiert werden. Diese Validierung kann wiederum von dem Rechengerät oder gegebenenfalls auch von dem Steuergerät 16 durchgeführt werden. Zur Ermittlung von Messwerten können beispielsweise der erste und der zweite Temperatursensor 12, 14 verwendet werden. Als Ergebnis des zweiten Schrittes 22 liegt dann ein optimiertes Simulationsmodell des thermischen Verhaltens des Schaltfelds 10 in Abhängigkeit von der Zeit vor.

Es wird darauf hingewiesen, dass der zweite Schritt 22, also die Validierung des Simulationsmodells für das thermische Verhalten des Schaltfelds 10 gegebenenfalls auch entfallen kann.

In einem dritten Schritt 23 werden aus dem optimierten Simulationsmodell des thermischen Verhaltens des Schaltfelds 10 eine oder mehrere Transferfunktion/en ermittelt.

Bei einer derartigen Transferfunktion handelt es sich ganz allgemein um einen mathematischen Zusammenhang, der mindestens zwei oder mehrere Betriebsgrößen des Schaltfelds 10 miteinander in Beziehung setzt. Eine derartige Transferfunktion charakterisiert somit durch die gewählten Betriebsgrößen das thermische Verhalten des Schaltfelds 10.

Insbesondere handelt es sich bei einer Transferfunktion um eine mathematische Gleichung, die mindestens zwei oder mehrere Betriebsgrößen des Schaltfelds 10 miteinander verknüpft. Die Verknüpfung der Betriebsgrößen erfolgt dabei insbesondere über mathematische Funktionen und Parameter, wobei letztere konstant oder von Betriebsgrößen des Schaltfelds 10 abhängig sein können.

Für eine der Betriebsgrößen wird dabei ein Wert vorgegeben und für die andere/n Betriebsgröße/n wird ein Wert ermittelt, der in die Zukunft gerichtet ist. Beispielsweise kann der eine, vorgegebene Wert mit Hilfe einer Messung ermittelt werden und für die andere/n Betriebsgröße/n kann mit Hilfe der Transferfunktion ein maximal zulässiger Wert ermittelt werden, der nicht überschritten werden darf.

Die Transferfunktion ist dabei derart aufgebaut, dass für einen bestimmten Zustand des Schaltfelds 10 das Ergebnis der Transferfunktion möglichst gleichartig ist zu einem Ergebnis einer entsprechenden Verknüpfung der entsprechenden Betriebsgrößen in dem optimierten Simulationsmodell. Dies bedeutet, dass insbesondere die Parameter der Transferfunktion derart gewählt sind, dass sich bei der Transferfunktion für den bestimmten Zustand des Schaltfelds 10 ein Ergebnis ergibt, das einem Ergebnis einer entsprechenden Verknüpfung der entsprechenden Betriebsgrößen in dem optimierten Simulationsmodell entspricht.

Bei einem ersten, auf das Schaltfeld 10 der Figur ausgerichteten Beispiel kann ein bestimmter Wert $I_{geg}$ eines innerhalb des Schaltfelds 10 fließenden Stroms I vorgegeben werden, und es kann dann mit Hilfe einer ersten Transferfunktion ermittelt werden, wie lange, also für welche maximale Zeitdauer $t_{max}$ dieser bestimmte Wert $I_{geg}$ des Stroms I vorhanden sein darf bzw. fließen darf, ohne dass ein Schaden an dem Schaltfeld 10 entsteht. Bei der Ermittlung der maximalen Zeitdauer $t_{max}$ wird von der Transferfunktion das thermische Verhalten des Schaltfelds 10 berücksichtigt.

Eine derartige erste Transferfunktion kann beispielsweise durch die folgende Gleichung realisiert werden:

$$t_{\max}\left(I_{geg}\right) = \left(\sum_{0}^{x}\left(a^{x} + b\right)\right)^{\frac{z}{y}} \qquad (1)$$

Die Parameter a, b, x, y und z sind gemäß der nachfolgenden Gleichung (2) abhängig von der Bauteiltemperatur TB, der Umgebungstemperatur TU und dem vorgegebenen Strom $I_{geg}$.

$$\left(a, b, x, y, z\right) = f\left(TB; TU; I_{geg}\right) \qquad (2)$$

Die Parameter y, z ermöglichen das Erzeugen einer Exponential- oder Wurzelfunktion. Der Parameter x kann vorteilhaft auf einen Wert kleiner oder gleich "10" begrenzt werden, größere Werte sind aber auch möglich. Die Gleichung (1) kann alternativ auch abschnittsweise definiert werden, insbesondere bezüglich der Bauteiltemperatur TB und der Umgebungstemperatur TU. Die Parameter a, b können in diesem Fall fest vorgegeben werden.

Bei einem zweiten, ebenfalls auf das Schaltfeld 10 der Figur ausgerichteten Beispiel kann ein bestimmter Wert $t_{geg}$ einer Zeitdauer für das Fließen eines Stroms I innerhalb des Schaltfelds 10 vorgegeben werden, und es kann dann mit Hilfe einer zweiten Transferfunktion ermittelt werden, welcher maximale Wert $I_{max}$ dieses Stroms I zukünftig vorhanden sein darf bzw. fließen darf, ohne dass ein Schaden an dem Schaltfeld 10 entsteht. Bei der Ermittlung des maximalen Stroms $I_{max}$ wird von der Transferfunktion das thermische Verhalten des Schaltfelds 10 berücksichtigt.

Eine derartige zweite Transferfunktion kann beispielsweise durch die folgende Gleichung realisiert werden:

$$I_{\max}\left(t_{geg}\right) = \left(\sum_{0}^{u}\left(c^{u} + d\right)\right)^{\frac{w}{v}} \qquad (3)$$

Die Parameter c, d, u, v und w sind gemäß der nachfolgenden Gleichung (4) abhängig von der Bauteiltemperatur TB, der Umgebungstemperatur TU und dem vorgegebenen Zeitdauer $t_{geg}$.

$$\left(c,d,u,v,w\right)=f\left(TB;TU;t_{geg}\right)\qquad(4)$$

Die Parameter v, w ermöglichen das Erzeugen einer Exponential- oder Wurzelfunktion. Der Parameter u kann vorteilhaft auf einen Wert kleiner oder gleich "10" begrenzt werden, größere Werte sind aber auch möglich. Die Gleichung (3) kann alternativ auch abschnittsweise definiert werden, insbesondere bezüglich der Bauteiltemperatur TB und der Umgebungstemperatur TU. Die Parameter c, d können in diesem Fall fest vorgegeben werden.

Es versteht sich, dass in entsprechender Weise auch andere Transferfunktionen mit andersartigen Gleichungen und Parametern gebildet werden können. Die Ermittlung der Transferfunktion/en, insbesondere die Ermittlung der jeweiligen Parameter kann mit Hilfe eines Rechengeräts, gegebenenfalls mit Hilfe des Steuergeräts 16 ausgeführt werden.

Die Ermittlung der Transferfunktion/en, also insbesondere die Ermittlung der jeweiligen Parameter, kann auf unterschiedliche Art und Weise erfolgen. Beispielsweise kann diese Ermittlung dahingehend durchgeführt werden, dass eine allgemeine mathematische Gleichung bestimmter Ordnung mit anfangs unbestimmten Parametern vorgegeben wird, und dass mittels einer Vielzahl von Probierschritten diejenigen Parameter gesucht werden, die zu einem Ergebnis führen, das einem entsprechenden Ergebnis des optimierten Simulationsmodells möglichst gleichartig ist. Die Art und Weise der Ermittlung der Transferfunktion/en ist nicht Gegenstand der vorliegenden Patentanmeldung.

Als Ergebnis des dritten Schrittes 23 liegt somit zumindest eine Transferfunktion vor, die einen bestimmten Aspekt des thermischen Verhaltens des Schaltfelds 10 betrifft und darstellt.

Ein vierter Schritt 24 stellt den Betrieb des Schaltfelds 10 dar. Während des Betriebs des Schaltfelds 10 wird/werden die Transferfunktion/en einmalig oder mehrfach oder fortlaufend berechnet, und zwar immer für den jeweils aktuellen Zustand des Schaltfelds 10. Anhand des/der Ergebnisse/s der Transferfunktion/en kann dann der weitere Betrieb des Schaltfelds 10 ganz allgemein beeinflusst werden. Die letztgenannte Beeinflussung des Schaltfelds 10 ist in der Figur 2 durch einen Pfeil 26 dargestellt.

Wird beispielsweise die erste Transferfunktion während des Betriebs für den aktuellen Zustand des Schaltfelds 10 berechnet, so stellt -wie erläutert wurde - das Ergebnis der ersten Transferfunktion einen Wert dar, wie lange, also für welche maximale Zeitdauer $t_{max}$, der vorgegebene Strom $I_{geg}$ innerhalb des Schaltfelds 10 vorhanden sein darf bzw. fließen darf, ohne dass ein Schaden an dem Schaltfeld 10 entsteht. Nach der Berechnung der ersten Transferfunktion kann damit überwacht werden, ob im weiteren Betrieb des Schaltfelds 10 die genannte maximale Zeitdauer $t_{max}$ überschritten wird oder nicht. Wird die maximale Zeitdauer $t_{max}$ überschritten, so kann beispielsweise der innerhalb des Schaltfelds 10 fließende Strom I abgeschaltet werden. Ein Schaden an dem Schaltfeld 10 kann somit in vorausschauender Weise mit Hilfe der Transferfunktion vermieden werden.

Wird beispielsweise die zweite Transferfunktion während des Betriebs für den aktuellen Zustand des Schaltfelds 10 berechnet, so stellt -wie erläutert wurde - das Ergebnis der zweiten Transferfunktion den maximalen Wert $I_{max}$ des innerhalb des Schaltfelds 10 fließenden Stroms I dar, der während der nachfolgenden Zeitdauer $t_{geg}$ vorhanden sein darf bzw. fließen darf, ohne dass ein Schaden an dem Schaltfeld 10 entsteht. Nach der Berechnung der zweiten Transferfunktion kann damit überwacht werden, ob im weiteren Betrieb des Schaltfelds 10 der genannte maximale Strom $I_{max}$ überschritten wird oder nicht. Wird die maximale Strom $I_{max}$ während der Zeitdauer $t_{geg}$ überschritten, so kann beispielsweise der innerhalb des Schaltfelds 10 fließende Strom I abgeschaltet werden. Ein Schaden an dem Schaltfeld 10 kann somit in vorausschauender Weise mit Hilfe der Transferfunktion vermieden werden.

Die Berechnung der Transferfunktion/en wird von einem Rechengerät ausgeführt. Gegebenenfalls kann diese Berechnung von dem Steuergerät 16 durchgeführt werden. Die Berechnung der einzelnen Transferfunktionen kann beispielsweise in äquidistanten Zeitabständen vorgenommen werden.

Die Berechnung einer einzelnen Transferfunktion erfordert für das Rechengerät nur einen sehr geringen zeitlichen Aufwand. Die Berechnung einer einzelnen Transferfunktion kann daher in Echtzeit durchgeführt werden. Dies bedeutet, dass das Ergebnis der Transferfunktion von dem Rechengerät so schnell berechnet wird, dass eine gegebenenfalls erforderliche Beeinflussung des Schaltfelds 10 aufgrund des ermittelten Ergebnisses der Transferfunktion noch so rechtzeitig vorgenommen werden kann, dass ein Schaden an dem Schaltfeld 10 in jedem Fall vermieden wird. Mit anderen Worten bedeutet dies, dass die Transferfunktion so schnell berechnet wird, dass eine aus dem Ergebnis der Transferfunktion resultierende Reaktion in jedem Fall noch seine erwünschte Wirkung erzielt.

Würde man beispielsweise während des Betriebs des Schaltfelds 10 anstelle der Transferfunktion das Simulationsmodell des thermischen Verhaltens des Schaltfelds 10 verwenden, so würde die Erstellung dieses Simulationsmodells einen wesentlich größeren zeitlichen Aufwand erfordern und könnte daher nicht in Echtzeit durchgeführt werden. Dies würde bedeuten, dass ein Schaden an dem Schaltfeld 10 bereits eintreten würde, bevor dieser Schaden mittels des Simulationsmodells erkannt werden könnte.

Die Ermittlung des Simulationsmodells für das thermische Verhalten des Schaltfelds 10 wird deshalb insbesondere vor dem eigentlichen Betrieb des Schaltfelds 10 durchgeführt. Entsprechendes gilt gegebenenfalls auch für die Validierung des Simulationsmodells. Ebenso wird die Ermittlung der Transferfunktion/en, insbesondere der jeweiligen Parameter vor dem eigentlichen Betrieb des Schaltfelds 10 vorgenommen. Im Betrieb wird/werden dann nur die Transferfunktion/en für den jeweils aktuellen Zustand des Schaltfelds 10 in Echtzeit ermittelt und mögliche Beeinflussungen des Schaltfelds 10 basieren nur auf dieser/diesen Transferfunktion/en.

Mit Hilfe der Transferfunktion/en ist es daher möglich, den Betrieb des Schaltfelds 10 zu überwachen. Jede einzelne Transferfunktion deckt dabei - wie erläutert wurde - einen bestimmten Aspekt des thermischen Verhaltens des Schaltfelds 10 ab, so dass jeder dieser Aspekte durch die zugehörige Transferfunktion überwacht werden kann. Wird bei einer oder mehreren der Transferfunktionen festgestellt, dass ein Schaden an dem Schaltfeld 10 zu erwarten ist, so kann das Schaltfeld 10 vor dem Eintreten des Schadens dahingehend beeinflusst werden, dass der Schaden erst gar nicht eintritt.

Das vorstehend beschriebene Verfahren zum Betreiben einer elektrischen Schaltanlage kann ganz allgemein auch zum Zwecke der Zustandsbeschreibung der elektrischen Schaltanlage verwendet werden.

Weiterhin kann das beschriebene Verfahren beispielsweise bei einer Mittelspannungsschaltanlage zum Einsatz kommen.

**Patentansprüche**

1.  Verfahren zum Betreiben eines Schaltfelds (10) einer elektrischen Schaltanlage, wobei das Schaltfeld (10) eine Mehrzahl elektrischer Komponenten aufweist, insbesondere Leistungsschalter, Trenner/Erder-Schalter oder dergleichen, und wobei Sensoren zur Messung von Betriebsgrößen vorhanden sind, insbesondere zur Messung von Strömen, Spannungen, Temperaturen, Zeitdauern oder dergleichen, wobei ein Simulationsmodell des thermischen Verhaltens des Schaltfelds (10) vor einem Betrieb des Schaltfeldes (10) ermittelt wird (21), **dadurch gekennzeichnet, dass** in Abhängigkeit von dem Simulationsmodell eine Transferfunktion vor dem Betrieb des Schaltfeldes (10) ermittelt wird (23), die mindestens zwei Betriebsgrößen des Schaltfelds (10) miteinander in Beziehung setzt, dass im Betrieb des Schaltfeldes (10) mittels der Transferfunktion das Schaltfeld (10) überwacht wird, wobei für eine der Betriebsgrößen ein Wert vorgegeben wird, und wobei für die andere/n Betriebsgröße/n über die Transferfunktion ein Wert ermittelt wird, der in die Zukunft gerichtet ist, dass die Berechnung der Transferfunktion in Echtzeit durchgeführt wird, dass die Transferfunktion mit einem im Betrieb des Schaltfelds (10) auftretenden Wert der vorgegebenen Betriebsgröße berechnet wird (24), und dass in Abhängigkeit von dem mittels der Transferfunktion ermittelten Wert der anderen Betriebsgröße/n das Schaltfeld (10) so beeinflusst wird (26), dass ein Schaden vermieden wird.

2.  Verfahren nach Anspruch 1 wobei die Transferfunktion Parameter aufweist, die von Betriebsgrößen des Schaltfelds (10) abhängig sind, und wobei die Parameter ermittelt werden.

3.  Verfahren nach Anspruch 1, wobei der vorgegebene Wert der einen Betriebsgröße eine bestimmte Zeitdauer ($t_{geg}$) ist, und wobei der ermittelte Wert der anderen Betriebsgröße ein maximaler Strom ($i_{max}$) ist.

4.  Verfahren nach Anspruch 1, wobei der vorgegebene Wert der einen Betriebsgröße ein bestimmter Strom ($I_{geg}$) ist, und wobei der ermittelte Wert der anderen Betriebsgröße eine maximale Zeitdauer ($t_{max}$) ist.

5.  Verfahren nach einem der Ansprüche 3 bzw. 4, wobei ein Strom (I) innerhalb des Schaltfelds (10) abgeschaltet wird, wenn der maximale Strom ($i_{max}$) bzw. die maximale Zeitdauer ($t_{max}$) überschritten wird.

6.  Verfahren nach einem der vorstehenden Ansprüche, wobei eine Bauteiltemperatur (TB) und/oder eine Umgebungstemperatur (TU) ermittelt werden, und wobei die Transferfunktion in Abhängigkeit von der Bauteiltemperatur (TB) und/oder der Umgebungstemperatur (TU) ermittelt wird.

7.  Verfahren nach Anspruch 6, wobei die Bauteiltemperatur (TB) an einer elektrischen Komponente des Schaltfelds (10) gemessen wird.

8.  Verfahren nach Anspruch 6 oder 7, wobei die Umgebungstemperatur (TU) unabhängig von einer elektrischen Komponente des Schaltfelds (10) gemessen wird.

9.  Elektrische Schaltanlage mit einem Schaltfeld (10), wobei das Schaltfeld (10) eine Mehrzahl elektrischer Komponenten aufweist, insbesondere Leistungsschalter, Trenner/Erder-Schalter oder dergleichen, und wobei Sensoren zur Messung von Betriebsgrößen vorhanden sind, insbesondere zur Messung von Strömen, Spannungen, Temperaturen, Zeitdauern oder dergleichen, **dadurch gekennzeichnet, dass** die elektrische Schaltanlage ein Steuergerät (16) umfasst, welches zur Ausführung des Verfahrens nach einem der vorstehenden Ansprüche angepasst ist.

**Claims**

1. Method for operating a switchboard (10) of an electric switchboard plant, the switchboard (10) comprising a plurality of electric components, particularly power switches, disconnecting/grounding switches or the like, and wherein sensors for measuring operating parameters are provided, particularly for measuring currents, voltages, temperatures, time periods or the like, wherein, before operating the switchboard (10), a simulation model of the thermal behavior of the switchboard (10) is determined (21), **characterized in that** depending on the simulation model a transfer function is determined (23) before operating the switchboard (10), which function puts at least two operating parameters of the switchboard (10) in relation to each other, that, during the operation of the switchboard (10), the switchboard (10) is monitored by means of the transfer function, wherein a value for one of the operating parameters is predetermined, and wherein for one or more other operating parameters a future-oriented value is determined by the transfer function, that calculating the transfer function is performed in real time, that the transfer function is calculated (24) with a value of the predetermined operating parameters occurring during operation of the switchboard (10), and that, depending on the value of one or more other operating parameters which have been determined by means of the transfer function, the switchboard (10) is affected (26) in such a way that damage will be avoided.

2. Method as claimed in claim 1, wherein the transfer function has parameters which depend on operating parameters of the switchboard (10), and wherein the parameters are determined.

3. Method as claimed in claim 1, wherein the predetermined value of said one operating parameter is a certain time period ($t_{geg}$), and wherein the determined value of the other operating parameter is a maximum current (imax).

4. Method as claimed in claim 1, wherein the predetermined value of said one operating parameter is a certain current ($I_{geg}$), and wherein the determined value of the other operating parameter is a maximum time period (tmax).

5. Method as claimed in one of claims 3 or 4, wherein a current (I) within the switchboard (10) is switched off when the maximum current ($i_{max}$) or the maximum time period ($t_{max}$) have been exceeded.

6. Method as claimed in one of the preceding claims, wherein a component temperature (TB) and/or an ambient temperature (TU) are determined, and wherein the transfer function is determined depending on the component temperature (TB) and/or the ambient temperature (TU).

7. Method as claimed in claim 6, wherein the component temperature (TB) is measured at an electric component of the switchboard (10).

8. Method as claimed in claim 6 or 7, wherein the ambient temperature (TU) is measured independent of an electric component of the switchboard (10).

9. Electric switchboard plant with a switchboard (10), the switchboard (10) comprising a plurality of electric components, particularly power switches, disconnecting/grounding switches or the like, and wherein sensors for measuring operating parameters are provided, particularly for measuring currents, voltages, temperatures, time periods or the like, **characterized in that** the electric switchboard plant comprises a controller (60) which is adapted for executing the method according to one of the preceding claims.

**Revendications**

1. Procédé pour faire fonctionner un tableau de distribution (10) d'une installation de distribution électrique, dans lequel le tableau de distribution (10) présente une pluralité de composants électriques, en particulier de disjoncteurs, de commutateurs de sectionneur/de prise de terre ou similaires, et dans lequel des capteurs destinés à mesurer des grandeurs de fonctionnement, en particulier à mesurer des courants, des tensions, des températures, des durées ou similaires, sont présents, dans lequel un modèle de simulation du comportement thermique du tableau de distribution (10) est déterminé (21) avant un fonctionnement du tableau de distribution (10), **caractérisé en ce que**, en fonction du modèle de simulation, une fonction de transfert est déterminée (23) avant le fonctionnement du tableau de distribution (10), laquelle met en relation aux moins deux grandeurs de fonctionnement du tableau de distribution (10) l'une avec l'autre, **en ce que**, lors du fonctionnement du tableau de distribution (10), le tableau de distribution (10) est surveillé au moyen de la fonction de transfert, dans lequel, pour une des grandeurs de fonctionnement, une valeur est prédéfinie, et dans lequel, pour l'autre (les autres) grandeur(s) de fonctionnement, une valeur qui est tournée vers le futur est déterminée par l'intermédiaire de la fonction de transfert, **en ce que** le calcul de la fonction de transfert est effectué en temps réel, **en ce que** la fonction de transfert est calculée (24) au moyen d'une valeur, apparaissant lors du fonctionnement du tableau de distribution (10), de la grandeur de fonctionnement prédéfinie, et **en ce que**, en fonction de la valeur, déterminée au moyen de la fonction de transfert, de l'autre (des autres) grandeur(s) de fonctionnement, le tableau de distribution (10) est influencé (26), de sorte qu'un dommage est évité.

2. Procédé selon la revendication 1, dans lequel la fonction de transfert présente des paramètres qui sont dépendants des grandeurs de fonctionnement du tableau de distribution (10), et dans lequel les paramètres sont déterminés.

3. Procédé selon la revendication 1, dans lequel la valeur prédéfinie d'une des grandeurs de fonctionnement est une durée ($t_{geg}$) définie, et dans lequel la valeur déterminée de l'autre grandeur de fonctionnement est un courant maximal ($i_{max}$) .

4. Procédé selon la revendication 1, dans lequel la valeur prédéfinie d'une des grandeurs de fonctionnement est un courant ($I_{geg}$) défini, et dans lequel la valeur déterminée de l'autre grandeur de fonctionnement est une durée maximale ($t_{max}$) prédéfinie.

5. Procédé selon l'une quelconque des revendications 3 ou 4, dans lequel un courant (I) à l'intérieur du tableau de distribution (10) est coupé lorsque le courant maximal ($i_{max}$) ou la durée maximale ($t_{max}$) est dépassé (e) .

6. Procédé selon l'une quelconque des revendications précédentes, dans lequel une température d'élément (TB) et/ou une température ambiante (TU) sont déterminées, et dans lequel la fonction de transfert est déterminée en fonction de la température d'élément (TB) et/ou de la température ambiante (TU).

7. Procédé selon la revendication 6, dans lequel la température d'élément (TB) est mesurée sur un composant électrique du tableau de distribution (10).

8. Procédé selon la revendication 6 ou 7, dans lequel la température ambiante (TU) est mesurée indépendamment d'un composant électrique du tableau de distribution (10).

9. Installation de distribution électrique avec un tableau de distribution (10), dans laquelle le tableau de distribution (10) présente une pluralité de composants électriques, en particulier de disjoncteurs, de commutateurs de sectionneur/de prise de terre ou similaires, et dans laquelle des capteurs destinés à mesurer des grandeurs de fonctionnement, en particulier à mesurer des courants, des tensions, des températures, des durées ou similaires, sont présents, **caractérisée en ce que** l'installation de distribution électrique comprend un appareil de commande (16), lequel est conçu pour mettre en oeuvre le procédé selon l'une quelconque des revendications précédentes.

Fig. 1

Fig. 2

**IN DER BESCHREIBUNG AUFGEFÜHRTE DOKUMENTE**

**In der Beschreibung aufgeführte Patentdokumente**

- JP 2009254104 A